# EUROPEAN PATENT APPLICATION

(11) **EP 4 704 010 A1**
(43) Date of publication of application: **04.03.2026**
(21) Application number: 25199217.8
(22) Date of filing: 29.08.2025
(51) Int. Cl.: G06Q 20/40, H04L 9/40, G06Q 20/38

(54) **SYSTEM, APPARATUS AND METHOD FOR DYNAMIC AUTHENTICATION**

(30) Priority: 29.08.2024 GB 202412700
(71) Applicant: Safecypher Ltd, Wetherby LS22 6LX (GB)
(72) Inventor: JORDAN, Benjamin Marcus, Leeds, LS16 5HN (GB)
(74) Representative: Potter, Julian Mark

(57) **Abstract**

A payment processing network configured for dynamic authentication integration is disclosed. The network comprises an Access Control Server (ACS) and an issuer processing system in communication over the network. The ACS is configured to receive an authentication request message (AReq) including a dynamic authentication code, extract the code, generate a validation request including the code, and transmit the validation request to the issuer processing system. The issuer processing system is configured to forward the validation request to a dynamic authentication system, receive a validation result from the dynamic authentication system, and return the validation result to the ACS. The ACS further comprises a risk calculation engine configured to receive the validation result, calculate a risk factor derived from transaction metadata, apply a risk modification algorithm that utilises the validation result and the risk factor to generate a modified risk factor, and generate an authentication response message (ARes) based on the modified risk factor for transmission over the communications network.

## Description

### Field

One or more embodiments of the present invention relate to computer systems and methods for processing authentication requests in distributed electronic networks. More specifically, but not exclusively, the invention relates to systems and methods in electronic payment processing systems, secure data transmission networks, and scenarios where real-time authentication decisions are made.

### Background

Electronic authentication processing systems have become increasingly important as the volume of digital transactions continues to grow exponentially. Modern authentication networks routinely process millions of authentication requests daily, each requiring risk assessment and decision-making within strict latency constraints.

### Traditional Risk Assessment Processing

Conventional electronic authentication systems rely primarily on probabilistic risk assessment algorithms that analyse multiple data points to determine the likelihood that an authentication request is legitimate. These systems typically evaluate factors such as network origination data (IP geolocation, device fingerprinting), behavioural patterns (transaction timing, frequency analysis), contextual information (merchant categories, transaction amounts), and historical patterns (user activity profiles, location consistency).

The risk assessment process involves computationally intensive algorithms that assign weighted scores to each factor and calculate an aggregate risk score. When this score exceeds predetermined thresholds established by system administrators, the authentication system triggers additional verification procedures, commonly referred to as "step-up" or "challenge" authentication.

### Conventional Challenge Processing

Challenge authentication procedures create significant computational and network resource demands on electronic systems. When a risk threshold is exceeded, the system must initiate a multi-step verification process that typically involves: generating and transmitting authentication codes through secondary communication channels (such as SMS or push notifications), maintaining active session states during user interaction periods, processing user responses against stored validation data, and managing timeout scenarios and retry mechanisms.

Each challenge process consumes substantial system resources including database queries for session management, network bandwidth for multi-channel communications, computational cycles for cryptographic operations, and memory allocation for maintaining transaction state across extended time periods. In high-volume systems processing millions of authentication requests, even a modest challenge rate can result in significant resource consumption and system performance degradation.

### Cascade Failure Problems in Authentication Networks

A particularly problematic aspect of conventional challenge-based authentication systems is their susceptibility to cascade failure scenarios. When challenge mechanisms are compromised, such as through interception of authentication codes transmitted over network channels, the resulting fraudulent transactions trigger automated security responses that increase risk thresholds for affected accounts.

This creates a self-reinforcing cycle where security breaches lead to more restrictive authentication policies, which in turn increase the frequency of challenge procedures for legitimate users. The increased challenge frequency expands the attack surface for potential security compromises, leading to more fraudulent activities and further threshold increases. This cascade effect can rapidly degrade system performance and user experience while simultaneously reducing overall security effectiveness.

### Limitations of Current Risk Assessment Models

Current probabilistic risk assessment models face inherent limitations in their reliance on data that can be manipulated or spoofed. Network-based indicators such as IP addresses can be masked through proxy services or compromised through various attack vectors. Device fingerprinting can be circumvented through browser modifications or virtual environments. Behavioural patterns can be studied and replicated by sophisticated attackers over time.

These probabilistic factors, while useful for risk assessment, provide only statistical confidence rather than definitive authentication validation. The aggregate uncertainty inherent in probabilistic models necessitates conservative threshold settings that err toward triggering challenges when confidence levels are insufficient, leading to the resource consumption and cascade failure problems described above.

### Recent Infrastructure Developments

Recent developments in electronic payment network protocols have introduced new capabilities for transmitting additional authentication data within existing message structures. Specifically, the Electronic Magnetic Value 3-D Secure (EMV 3-D Secure) specification version 2.3.1.1 has incorporated new data fields within the Authentication Request (AReq) and Authentication Response (ARes) message structures that enable the communication of card verification status information throughout the transaction processing pipeline.

These protocol enhancements introduced three new conditional data fields: "cardSecurityCode" for transmitting verification values, "cardSecurityCodeStatus" for communicating validation results, and "cardSecurityCodeStatusSource" for identifying the validation authority. These fields were incorporated into the EMV specification to provide enhanced data visibility across payment network participants, primarily for transaction monitoring and compliance reporting purposes.

Importantly, these protocol modifications were not designed or intended to address the computational efficiency challenges or cascade failure vulnerabilities inherent in existing challenge-based authentication systems. The EMV specification updates focused on data transparency and reporting capabilities rather than authentication processing optimization. The technical opportunity to leverage these new data transmission capabilities for reducing authentication processing overhead and preventing cascade failure scenarios has not been recognized or implemented in prior art systems.

These protocol enhancements create opportunities for integrating additional authentication factors into existing risk assessment frameworks, but prior art systems have not effectively leveraged these capabilities to address the computational efficiency and cascade failure problems inherent in challenge-based authentication approaches. Aspects and embodiments in accordance with the present invention were devised with the foregoing technical challenges in mind.

### Summary

Viewed from a first aspect, the present invention provides a payment processing network configured for dynamic authentication integration, the network comprising: an Access Control Server ACS and issuer processing system operative to communicate with each other over the network, wherein the ACS is configured to: receive from the communications network an Authentication Request (AReq) message comprising a dynamic authentication code; extract the dynamic authentication code from the AReq message; generate a validation request comprising the dynamic authentication code; and transmit the validation request to the issuer processing system; and wherein the issuer processing system is configured to: receive the validation request from the ACS; forward the validation request comprising the dynamic authentication code to a dynamic authentication system; receive a validation result from the dynamic authentication system; and return the validation result to the ACS; the ACS further comprising a risk calculation engine configured to: receive the validation result from the issuer processing system; calculate a risk factor derived from transaction metadata; apply a risk modification algorithm that utilises the validation result and the risk factor to generate a modified risk factor; and generate an authentication response message (ARes) based on the modified risk factor for transmission over the communications network.

This system may provide technical advantages through the integration of validation results with probabilistic risk assessment algorithms. The use of dynamic authentication codes validated against stored reference secrets provides a binary validation signal that is less susceptible to interception or compromise than static codes, thereby improving the technical security of data transmission in the 3-D Secure protocol flow. The validation outcome enables the risk calculation engine to incorporate deterministic authentication results directly into its algorithms, which may lower the risk threshold for transactions and allows more low-risk transactions to be processed without challenge procedures. This can act to reduce the number of technical steps required for payment authentication, thereby decreasing system processing power requirements and supporting frictionless user authentication while maintaining security effectiveness.

The incorporation of validation results into probabilistic risk scoring algorithms provides authentication outcomes that can directly adjust risk models, reducing false positives and unnecessary challenge requests. The risk engine combines deterministic code validation with probabilistic metadata analysis, yielding a more accurate scoring process that reduces computational overhead while improving authentication accuracy.

Optionally, the network further comprises a computing device configured to generate the dynamic authentication code using a time-based algorithm and stored cryptographic secret within a secure processing environment.

The provision of a secure processing environment on the portable device for generating and storing cryptographic data isolates the sensitive secrets used to generate dynamic authentication codes from the main application environment, reducing susceptibility to compromise and preventing unauthorised access to cryptographic material.

Optionally, the dynamic authentication code is a time-based one-time password (TOTP) generated using a TOTP secret key and a current time value.

The generation of dynamic authentication codes using time-based algorithms and stored cryptographic secrets provides for both the portable device and the server independently generating the same code without needing continuous data exchange, reducing communication overhead. Synchronisation based on current time values makes codes valid only within narrow temporal windows, limiting exposure to interception or replay attacks while maintaining system efficiency.

Optionally, the risk calculation engine is further configured to apply a weighting function responsive to the validation result indicating a successful dynamic code validation.

This weighting function enables adaptive scoring where authentication factors have greater impact on lower-confidence probabilistic scores, operating to lift borderline transactions above typical challenge thresholds while maintaining conservative scoring for high-risk scenarios. This algorithmic approach reduces computational overhead by eliminating resource-intensive challenge procedures for authenticated transactions.

Optionally, the ACS is further configured to: identify the presence of a dynamic authentication code within the AReq messages based on an associated metadata flag; and extract a dynamic Card Verification Value (dCVV) from a Card Security Code field within the AReq message upon identifying the presence of a dynamic authentication code.

The inclusion of protocol adaptation capabilities in the ACS provides that dynamic authentication codes can be identified and routed for specialised handling without altering the existing static code processing pathway. The system is capable of maintaining full backwards compatibility with legacy 3DS infrastructures, enabling deployment without disruption to existing payment processing systems.

Optionally, the issuer processing system is further configured to execute static validation of the authentication code when dynamic validation is unavailable.

Providing static validation as a fallback when dynamic validation is unavailable ensures that transaction authentication can proceed even during dynamic system outages, improving service continuity. This resilience mechanism prevents unnecessary transaction failures by ensuring that the ACS always receives a validation outcome, thereby maintaining system stability and user experience during technical disruptions.

Viewed from a second aspect, the present invention provides an Access Control Server (ACS) for use in the network described above, configured to implement the dynamic authentication integration capabilities within existing 3D Secure infrastructure.

Viewed from a third aspect, the present invention provides an issuer processing system for use in the network described above, configured to interface with dynamic authentication systems and provide validation routing capabilities.

Viewed from a fourth aspect, the present invention provides a method for dynamic authentication integration in payment processing over a network, the method comprising: receiving, at an Access Control Server (ACS), an Authentication Request (AReq) message comprising a dynamic authentication code; extracting the dynamic authentication code from the AReq message; generating a validation request comprising the dynamic authentication code; transmitting the validation request to an issuer processing system; receiving, at the issuer processing system, the validation request from the ACS; forwarding the validation request comprising the dynamic authentication code to a dynamic authentication system; receiving a validation result from the dynamic authentication system at the issuer processing system; returning the validation result to the ACS; calculating, at the ACS, a risk factor derived from transaction metadata; applying a risk modification algorithm that utilises the validation result and the risk factor to generate a modified risk factor; and generating an authentication response message (ARes) based on the modified risk factor.

This method may provide the same technical benefits as the system briefly described above, enabling integration of deterministic authentication validation with existing probabilistic risk assessment frameworks to achieve computational efficiency improvements and challenge procedure reduction while maintaining security effectiveness and system compatibility.

### Brief description of the figures

One or more embodiments in accordance with the present invention will now be described, by way of non-limiting example only, and with reference to the accompanying drawings, in which:
Figure 1 is a process flow diagram depicting the conventional authentication processing system showing the technical challenges of challenge-based verification;
Figure 2 is a high-level system diagram illustrating the components of a system, comprising the Portable Device, Issuer System, and Dynamic Authentication, according to an embodiment of the present invention;
Figure 3 is a simplified flowchart depicting the key steps in a method for utilising the system, in accordance with an embodiment of the present invention;
Figure 4 is a process flow diagram showing the first-time card activation procedure, according to an embodiment of the present invention;
Figure 5 is a process diagram illustrating the end-to-end flow of the dynamic authentication system, in accordance with an embodiment of the present invention;

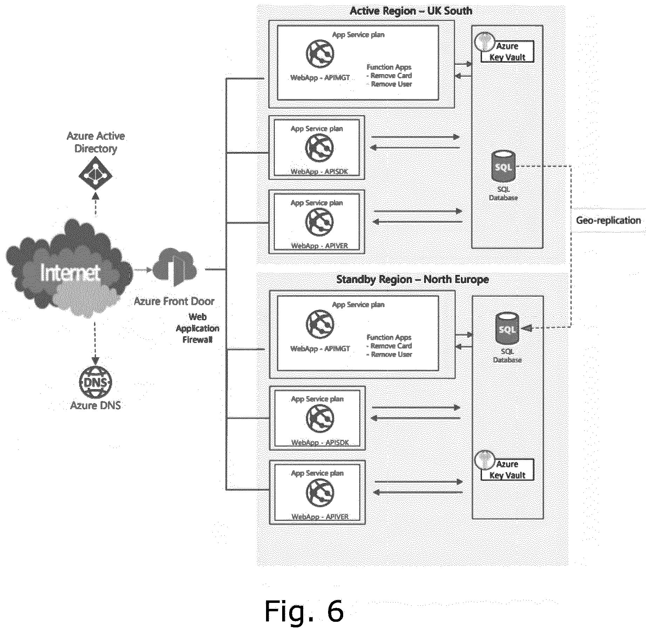

Figure 6 is a diagram depicting the Azure-based cloud infrastructure deployment, according to an embodiment of the present invention
Figure 7 is a system architecture diagram illustrating the enhanced authentication processing system according to an embodiment of the present invention; and
Figure 8 is a comparative flow diagram illustrating the technical effects of the enhanced authentication method.

### Detailed description

In the following description, for the purposes of non-limiting explanation only, numerous specific details are set forth to provide a thorough understanding of the present disclosure. In other instances, well-known structures and devices are shown in block diagram form to avoid unnecessarily obscuring the present disclosure.

### Conventional Authentication Processing System

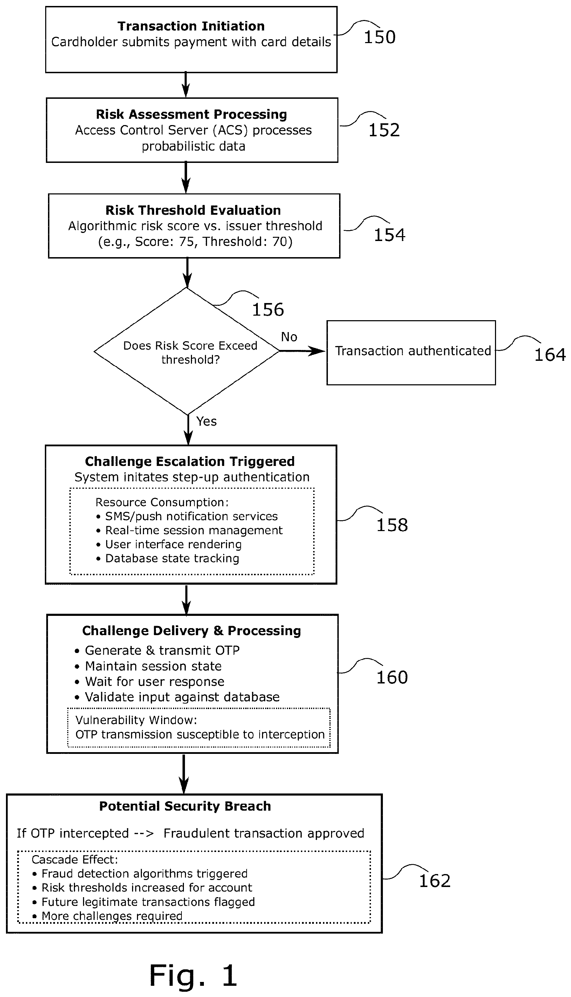

Figure 1 illustrates the technical challenges inherent in conventional electronic authentication processing systems that rely primarily on challenge-based verification mechanisms. This figure illustrates the computational resource consumption and cascade failure vulnerabilities that an embodiment in accordance with the present invention addresses.

The conventional authentication process begins at step 150 with transaction initiation, in which a user submits authentication credentials and transaction data to the electronic payment system.

At step 152, the Access Control Server (ACS) completes risk assessment processing using conventional probabilistic analysis algorithms such as logistic regression models, Bayesian inference systems, Random Forest ensemble methods, and anomaly detection algorithms. The ACS evaluates multiple data factors including network origination parameters (IP geolocation, device fingerprinting), behavioural pattern analysis (transaction frequency, timing patterns), contextual transaction data (merchant categories, transaction amounts), and historical user activity profiles. Each factor is assigned algorithmic weights and processed through mathematical risk calculation models to generate an aggregate risk score.

At step 154 the so-called critical risk threshold evaluation is conducted in which the calculated risk score is compared against predetermined threshold values. In the illustrated example, a risk score of 75 exceeds the configured threshold of 70, triggering the challenge escalation process.

When the risk threshold is exceeded the system challenge escalation procedures are initiated, step 158. This step sets out the computations conducted when the risk threshold is exceeded. The computation comprises a significant computational burden on the system architecture, requiring multiple resource-intensive operations such as:
- The system interfacing with external SMS gateway services or push notification platforms to deliver authentication codes to user devices. This involves API calls, message queuing, delivery confirmation processing, and retry logic for failed deliveries.
- The system allocating database resources to maintain transaction state information during the challenge period, including user context, transaction details, timeout parameters, and challenge attempt counters.
- Generating dynamic web interface elements serving them to present challenge forms, progress indicators, and error handling mechanisms to users.
- Undertaking persistent storage operations to log challenge events, update user profiles, and maintain audit trails for compliance and fraud detection purposes.

### Challenge Processing and Vulnerability Exposure

At step 160 the challenge delivery and processing phase is initiated, which introduces both computational overhead and security vulnerabilities. The system executes several technically complex operations such as:
- Generating cryptographically secure random codes which are transmitted through secondary communication channels. This process utilises cryptographic library operations, secure key management, and coordination with external service providers.
- Maintaining active database connections and memory allocation to preserve transaction context while awaiting user response. This consumes server resources that scale multiplicatively with concurrent challenge operations.
- Validating user inputs against stored challenge codes, requiring database queries, cryptographic verification operations, and timeout management logic.
- The challenge transmission phase creating a security vulnerability where authentication codes are transmitted over network channels susceptible to interception through various attack vectors including SMS interception, man-in-the-middle attacks, and communication channel compromise.

### Cascade Failure Mechanism

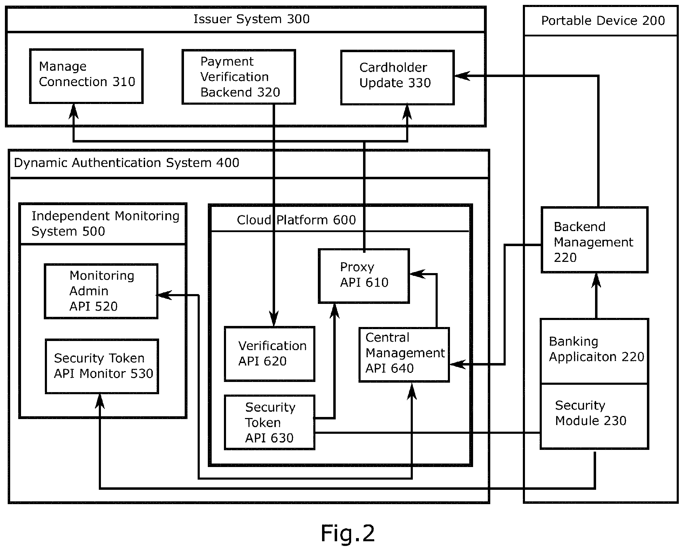

Step 162 in Figure 2 sets out the cascade failure mechanism that creates self-reinforcing system instability. When challenge codes are intercepted and used for fraudulent transactions, several automated system responses are triggered:
- Machine learning fraud detection systems identify the successful completion of fraudulent transactions and flag the associated user accounts as compromised or high-risk.
- Automated risk management systems increase authentication thresholds for affected accounts, making future legitimate authentication attempts more likely to trigger challenge procedures.
- Behavioural analysis algorithms mark transaction patterns associated with the fraudulent activity as suspicious, creating broader impact on similar legitimate transactions.
- The combination of higher thresholds and flagged patterns results in more frequent challenge triggering for legitimate users, expanding the attack surface for further security compromises.

### Impact of the Cascade Failure Mechanism

The cascade mechanism creates a self-reinforcing cycle where security measures intended to protect the system instead create additional vulnerabilities and computational burden. In high-volume systems processing millions of authentication requests, even modest interception rates such as 0.1% of SMS codes compromised through SIM swapping attacks or 1-3% of authentication sessions subject to man-in-the-middle interception, can trigger cascade effects that significantly degrade both system performance and security effectiveness.

The computational impact of this conventional approach scales poorly with transaction volume. Each challenge procedure consumes substantial server resources, requiring approximately 2-8 MB of memory allocation for session state maintenance, 15-45 seconds of active database connection time, and processing cycles equivalent to 50-150 standard authentication requests. In high-volume systems processing 10 million daily transactions, challenge rates of 15-25% can result in sustained memory usage of 300-600 GB and database connection pools operating at 80-95% capacity during peak periods., The cascade failure mechanism can cause challenge rates to increase exponentially under attack conditions. This creates both scalability limitations and operational stability risks for authentication processing infrastructure.

One or more embodiments in accordance with aspects of the present invention address one or more of these technical challenges by integrating deterministic authentication validation with existing probabilistic risk assessment algorithms, eliminating, or at least reducing, the need for resource-intensive challenge procedures while simultaneously preventing, or at least inhibiting, cascade failure scenarios through the elimination of vulnerable communication channels.

### System Overview

One or more embodiments of the present invention integrate a dynamic authentication system within 3D Secure (3DS) payment processing infrastructure. 3D Secure is an industry-standard authentication protocol developed to provide an additional security layer for online card-not-present transactions, operated under schemes such as "Visa Secure," "Mastercard Identity Check," and "American Express SafeKey." The protocol operates across three domains: the Issuer Domain (the cardholder's issuing bank and its Access Control Server), the Acquirer Domain (the merchant and acquirer infrastructure processing the transaction), and the Interoperability Domain (the payment systems, servers, and network components that route messages between issuer and acquirer). In one or more embodiments the dynamic authentication system is the system described in Fig. 2 and earlier patent application GB2412700.3.

Fig. 2 is a high-level system diagram illustrating the components of a dynamic authentication system, according to an embodiment of the present invention. The system in Figure 2 comprises a Portable Device 200, an Issuer System 300, a Dynamic Authentication System 400 comprising an Independent Monitoring System 500, and a Cloud Platform 600.

The Portable Device 200 comprises a Banking Application 210, a Backend Management component 220, and a Security Module 230. The Banking Application
The Banking Application 210 may serve as the user interface for cardholders to interact with the Dynamic Authentication System, which may be, for example, a mobile application running on a smartphone, tablet, or other computing device. The Backend Management 220 handles communication with the Issuer System 300 and the Dynamic Authentication System 400 and may include, but is not limited to, components for managing network connections, data synchronisation, and local data storage. The Security Module 230 is responsible for generating and managing cryptographic keys and tokens, which may include, for instance, hardware-backed key storage, secure enclaves, or software-based cryptographic libraries.

The Issuer System 300 comprises three main components: a Manage Connection 310, a Payment Verification Backend 320, and a Cardholder Update 330 module. These components facilitate the issuer's interaction with the dynamic authentication system 400, handle payment verification processes, and manage cardholder information updates respectively. The Issuer System 300 typically represents, without limitation, the infrastructure and systems of a financial institution, such as a bank, credit card company, or other entity that issues payment cards or manages financial accounts. For example, in one or more embodiments of the present invention, the Issuer System 300 may be the backend system of a large national bank that issues credit and debit cards to its customers.

The Dynamic Authentication System 400 comprises a Cloud Platform 600 which is configured to implement the dynamic credential generation and verification processes.

The Independent Monitoring System 500 comprises a Monitoring Admin API 520 and a Security Token API Monitor 530. These components provide oversight and monitoring capabilities to ensure the system's integrity and security.

The Cloud Platform 600 comprises a Proxy API 610, a Verification API 620, a Security Token API 630, and a Central Management API 640. These APIs are configured to facilitate communication between different system components, handle verification requests, manage security tokens, and provide centralised management capabilities.

It should be understood that while a bank is used in this example, the Issuer System 300 could represent any entity that needs to authenticate and verify transactions or identities in a secure, dynamic manner. This could include, without limitation, online payment platforms, cryptocurrency exchanges, or even non-financial systems that require high levels of security, such as government agencies or healthcare providers.

It should further be appreciated that while Fig. 2 depicts components as distinct entities, in practice, they may be implemented as software modules running on one or more physical servers or cloud-based virtual machines. Additionally, the components may be distributed across multiple geographic locations or cloud regions for redundancy and improved performance.

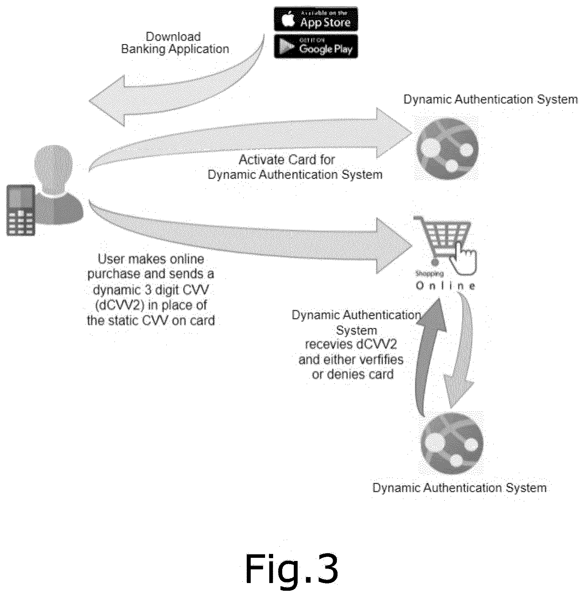

Fig. 3 is a simplified flowchart depicting the key steps in a method for utilising the dynamic authentication system, according to an embodiment of the present invention. This flowchart illustrates the high-level user journey from initially obtaining the Banking Application to completing a secure online transaction.

The described process begins when a user downloads the Banking Application 210 onto their Portable Device 200. This Banking Application 210 may be, for example and without limitation, a mobile application provided by the user's financial institution and available through standard mobile app stores.

Following the download, the next step involves activating the user's payment instrument such as a card for use with the Dynamic Authentication System 400. This activation process establishes the secure link between the user's payment instrument, the Banking Application 210, and the Dynamic Authentication System 400.

Once activated, the Authentication System 400 is ready for use. When the user initiates an online purchase, instead of providing the static CVV printed on their physical card, the Banking Application 210 will generate a dynamic CVV (dCVV2). This dCVV2 is a time-based one-time password that serves as a secure, temporary credential for the transaction.

The dCVV2 is then sent to the Dynamic Authentication System 400 and relevant parts of the Cloud Platform 600, such as the Verification API 620. The system receives the dCVV2 and performs the verification process.

During verification, the system may perform various checks which may include, but are not limited to:
1. Validating the timestamp of the dCVV2 to ensure it is within the acceptable time window.
2. Verifying the cryptographic integrity of the dCVV2.
3. Checking that the dCVV2 corresponds to the correct user account and card.
4. Ensuring the transaction details align with the user's account status and any preset limits.

Based on these checks, the system either verifies or denies the card use. This decision is then communicated back through the established channels, ultimately determining whether the transaction is approved or decline.

### Card Activation and Secret Generation Process

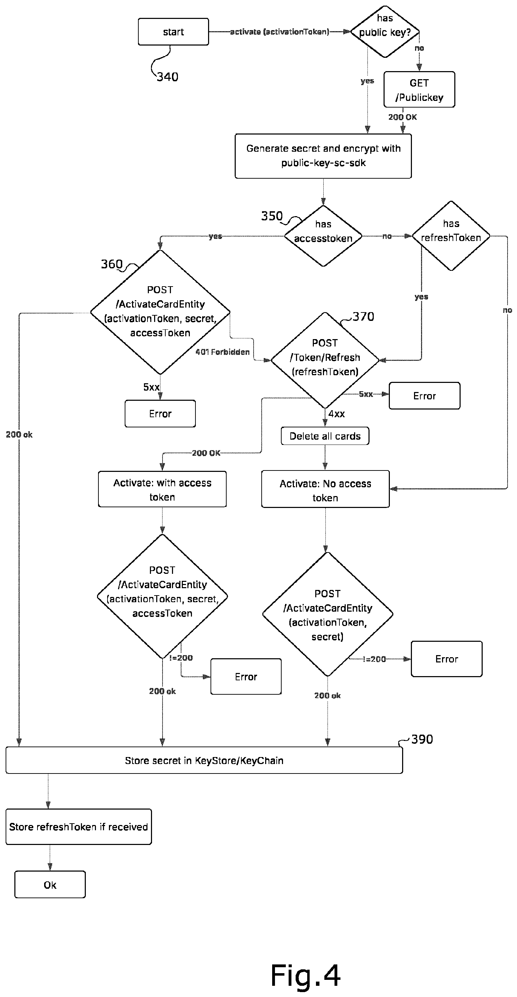

Fig. 4 is a process flow diagram depicting the first-time card activation procedure, according to an embodiment of the present invention. This diagram illustrates the steps involved in setting up a payment card for use with the system, including the cryptographic processes that ensure the security of the activation.

The process begins 340 with a check to determine if the Banking Application 210 on the Portable Device 200 has the necessary public key. If the public key is not present, the application may initiate a GET request to obtain the public key, which may be referred to as "public-key-sc-sdk". This public key ensures that the exchange of information between the Portable Device 200 and the Cloud Platform 600 is secure.

A GET request refers to a specific type of Hypertext Transfer Protocol (HTTP) request method. HTTP is a protocol used for transmitting data over the internet, and a GET request is one of several standard methods defined within this protocol. It should be appreciated that while a GET request is used in the described embodiment, the invention is not limited to this specific HTTP method. Other request methods or protocols could be employed to achieve the same purpose of securely obtaining the public key.

Once the public key is obtained, the process moves to the 'secret' generation phase beginning with checking if the Banking Application 210 has a valid access token 350. The Banking Application 210 is configured to generate a secret, which may be, for example, a Time-based One-Time Password (TOTP) cryptographically secure random data item. This secret is then encrypted using the public-key-sc-sdk, ensuring that it can only be decrypted by the corresponding private key held securely within the system, for example in the Dynamic Authentication System 400 or a secure part of the Cloud Platform 600.

The activation process diverges based on whether the Banking Application 210 has a valid access token 350. This token may be, for instance, a JSON Web Token (JWT) or any other suitable format for representing claims securely between parties. Regarding the presence or absence of a valid access token in the Banking Application 210, this aspect of the system relates to the authentication and authorisation of the application itself. The access token serves as a temporary credential that allows the Banking Application 210 to interact with the backend systems, including the Dynamic Authentication System 400 and relevant APIs in the Cloud Platform 600. The Banking Application 210 may or may not have a valid access token for several reasons, including but not limited to first-time use of the application 210, or token expiration because the user has not used the Banking Application 210 for an extended period.

If a valid access token is available, the application constructs a POST request to the "/ActivateCardEntity" endpoint 360. This request may comprise:
1. The activation token: A unique identifier provided by the Issuer System 300 during card issuance.
2. The encrypted secret: The result of encrypting the generated secret with public-key-sc-sdk.
3. The access token: The current valid access token.

If no valid access token is available, the application first attempts to refresh the token. It sends a POST request to the "/Token/Refresh" endpoint, including a refresh token 370. This refresh token is a long-lived credential that allows the application to obtain a new access token without requiring full re-authentication.

If the token refresh is successful, the application proceeds with the activation request as described above. If unsuccessful, it falls back to an activation method that does not require an access token. In this case, the POST request to "/ActivateCardEntity" which comprises only the activation token and the encrypted secret.

Upon receiving a successful response (indicated by a 200 OK status), the Banking Application 210 is configured to store the secret 390. On Android devices, this may involve using the KeyStore system, while on iOS devices, the Keychain may be utilised. These secure storage mechanisms protect the secret from unauthorised access, even if the device is compromised.

The stored secret forms the basis for future dynamic CVV generation. It may be used, for example, as a seed for a Time-based One-Time Password (TOTP) algorithm, which generates unique, time-sensitive codes for each transaction.

Throughout this process, error handling mechanisms are in place. If any step fails (indicated by 4xx or 5xx HTTP status codes), appropriate procedures are initiated. These may include retrying the request with exponential backoff, alerting the user with an appropriate error message, or logging the error for later analysis by the system administrators.

This activation process establishes a secure foundation for all future dynamic authentication operations. It creates a trusted channel between the Portable Device 200 and the backend systems, allowing for the secure generation and verification of dynamic CVVs.

### Secure Authentication Process and Time-Synchronized Code Generation

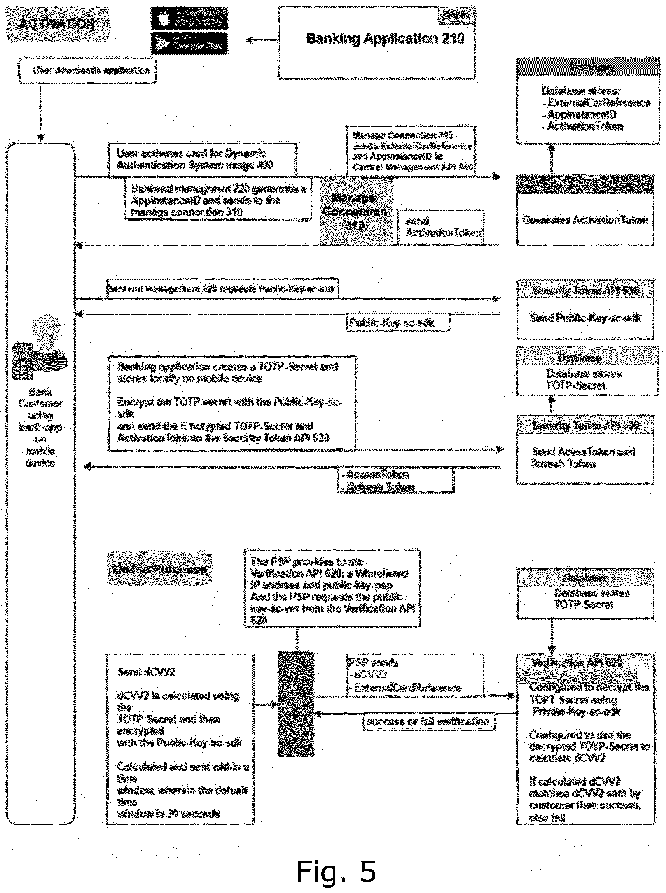

Fig. 5 is a process flow diagram illustrating the end-to-end flow of a dynamic authentication system according to an embodiment of the present invention
The process flow begins with a user downloading a banking application 210 onto their portable device 210. This application 210 serves as the primary interface for the user to interact with the Dynamic Authentication System 400. Upon launching the banking application, the user initiates the process to activate a payment instrument such as a 'credit card or debit card' for use with the Dynamic Authentication System 400.

The Backend Management 220 component is configured to generate a unique AppInstanceID, where the AppInstanceID is a randomly generated string that uniquely identifies the specific installation of the Banking Application 210 on the user's device, distinguishing a particular instance of the Banking Application 210 from others that might be installed on different devices or by different users.

The Backend Management module 220 is configured to communicate with the Manage Connection component 310 within the Issuer System 300. Backend Management module 220 sends the generated AppInstanceID to initiate the activation process. This step establishes the link between the specific instance of the banking application and the user's card in the Issuer's system.

In response to receiving the AppInstanceID, the Issuer System's Manage Connection component 310 is configured to generate an ExternalCardReference. This ExternalCardReference is a unique identifier for the user's card within the system, created to avoid storing sensitive card details directly in subsequent processes. It serves as a secure proxy for the actual card information throughout the authentication process.

The Manage Connection component 310 is then configured to transmit both the ExternalCardReference and the received AppInstanceID to the Central Management API 640 hosted on the Cloud Platform 600. This API is responsible for coordinating the activation process and managing the overall system state.

Upon receiving this information, the Central Management API is configured to generate a unique Activation Token. This token serves as a temporary credential for the ongoing activation process, ensuring that only legitimate activation attempts proceed.

The Central Management API 640 is then configured to store the ExternalCardReference, AppInstanceID, and Activation Token in a secure database within the Cloud Platform 600. This database serves as a central repository for all active devices and their associated credentials, allowing for efficient management and authentication of devices and cards.

Subsequently, the Backend Management module 220 requests the Public_Key-sc-sdk from the Security Token API. This public key is used for the subsequent encryption steps. The Public_Key-sc-sdk is part of a public-private key pair generated by the Security Token API. The private key of this pair is securely stored within the Cloud Platform 600 and is never shared, while the public key is distributed to the banking application 210 for encryption purposes.

With the Public_Key-sc-sdk in hand, the banking application 210 on the portable device is configured to generate a Time-based One-Time Password (TOTP) secret via the security module 230. This TOTP secret may be a cryptographically secure random value that serves as the basis for generating dynamic CVV codes. This secret is generated and stored locally within the Security Module 230 of the Portable Device 200 leveraging the device's built-in security features to protect it from unauthorised access. This enhances security by reducing the risk of interception during transmission and allowing for offline generation of authentication codes.

The banking application 210 is then configured to encrypt the TOTP secret using the Public_Key-sc-sdk. This encryption ensures the confidentiality of the secret during transmission over potentially insecure networks. The encrypted TOTP secret, along with the Activation Token, is sent by the banking application 210 to the Security Token API 630 on the Cloud Platform 600.

Upon receiving this data, the Security Token API is configured to store the encrypted TOTP secret in the database, associating it with the corresponding user and device information. This storage of the TOTP secret on both the Portable Device 200 and the Cloud Platform 600 allows the system to operate without constant communication between the two. Both ends of the system can independently generate the same dynamic CVV codes based on this shared secret and the current time.

This step completes the secure storage of all necessary components for future authentication processes.

The Security Token API 630 is then configured to generate an Access Token and a Refresh Token. These tokens are used to maintain a secure, ongoing communication between the portable device 200 and the Cloud Platform 600. The Access Token is a short-lived credential used for immediate authentication, while the Refresh Token is a long-lived credential used to obtain new Access Tokens without requiring the user to re-authenticate.

These tokens are sent back to the banking application 210 via the security token API 630 on the portable device and are securely stored for future authentication purposes. This completes the initialisation and activation process of the payment instrument.

When a transaction is initiated, the banking application 210 is configured to calculate a dynamic CVV (dCVV2) using the stored TOTP secret. This dCVV2 is generated within a specific time window, typically 30 seconds, to ensure its validity and uniqueness for each transaction. The user then uses this dCVV2 in place of the static CVV printed on their card when making a transaction.

The Payment Service Provider (PSP) system, which processes the transaction, has previously established a secure connection with the Verification API 620. This connection is secured using a separate set of cryptographic keys: the PSP provides its public key (Public_Key-psp) to the Verification API 620, and in return receives the Verification API's public key (Public_Key-sc-ver). These keys are used to establish a secure, encrypted channel for communication between the PSP and the Verification API 620.

When a transaction is made, the PSP is configured to send the transaction details, comprising the dCVV2 and ExternalCardReference, to the Verification API 620 for authentication. The Verification API is configured to retrieve the encrypted TOTP secret from the database and decrypt it using the Private_Key-sc-sdk, which is the private counterpart to the Public_Key-sc-sdk used earlier for encryption.

The Verification API 620 is then configured to use this decrypted TOTP secret to calculate the expected dCVV2 for the given time window, typically 30 seconds. It compares this calculated dCVV2 with the one provided in the transaction. If they match, the transaction is authenticated successfully; otherwise, it is rejected. The authentication result is communicated back to the PSP, which then proceeds with or declines the transaction accordingly.

Throughout this entire process, an Independent Monitoring System 500 is configured to oversee the operation of various components, particularly the Security Token API 630. This system ensures the integrity and performance of the authentication process, providing an additional layer of security and reliability to the overall system.

The Monitoring Admin API 520 provides an interface for system administrators to access real-time and historical data about the system's performance and security status. This may comprise but is not limited to: Transaction volumes and patterns, Authentication success and failure rates, Response times of various system components, Unusual activity or potential security threats, System resource utilisation. Through detailed performance metrics, the Independent Monitoring System 500 enables system administrators to identify bottlenecks or inefficiencies in the authentication process.

The Security Token API Monitor 530 is configured to monitor the generation, distribution, and usage of security tokens within the system. This component may be configured to perform functions such as: Tracking the lifecycle of access tokens and refresh tokens, Monitoring for unusual patterns in token requests or usage, Ensuring compliance with defined security policies regarding token expiration and renewal Detecting potential token-based attacks, such as replay attacks or token theft attempts. By continuously monitoring the system the Independent Monitoring System 500 can be configured to detect potential security threats or anomalies in real-time, allowing for swift response to any issues.

The Independent Monitoring System 500 operates without direct interaction with the core authentication flow, reducing the likelihood that its activities impact the performance or security of the main system. However, it can trigger alerts or even initiate automatic responses to critical issues, such as temporarily blocking suspicious IP addresses or forcing token renewals in case of detected security threats.

It should be appreciated that the system 200 can generate unique, time-dependent authentication codes without requiring constant communication between the Portable Device 200 and the Cloud Platform 600. Moreover, the time-synchronised nature of the TOTP algorithm ensures that each dCVV2 is valid only for a short period, typically 30 seconds, significantly reducing the window for potential attacks.

### Integration of the Dynamic Authentication System with 3D Secure Integration Architecture

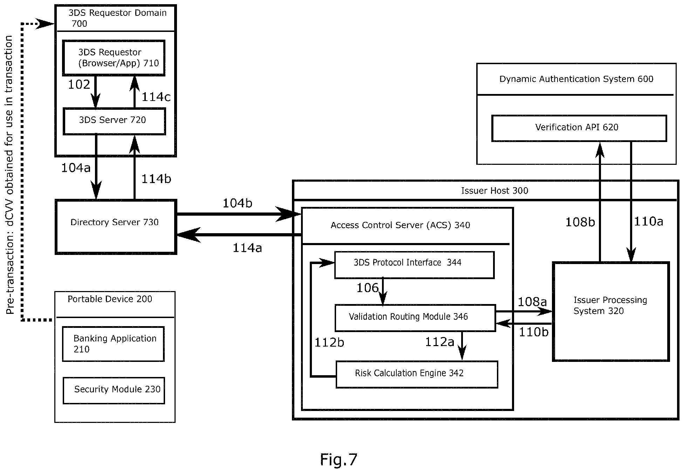

Figure 7 illustrates a system for dynamic authentication integration within 3D Secure payment processing according to an embodiment of the present invention. The system in Figure 7 comprises a 3DS Requestor Domain 700, an Issuer Host 300, a Portable Device 200, and a Dynamic Authentication System 600, all communicatively coupled via a computer communications network. In one or more embodiments, the dynamic authentication system 600 is the system described in Figure 2.

The Issuer Host 300 comprises the technical infrastructure operated by payment processors and authentication service providers such as TSYS, Worldpay, or other entities that provide Access Control Server (ACS) services to card issuing financial institutions. These providers are intermediaries between card issuers and the broader payment ecosystem, operating the technical systems required for 3D Secure authentication on behalf of multiple issuing banks and other financial organisations.

### 3DS Requestor Domain 700

The 3DS Requestor Domain 700 comprises a 3DS Requestor (Browser/App) 710 and a 3DS Server 720, representing the merchant or payment service providers' technical infrastructure responsible for initiating payment authentication processes.

The 3DS Requestor (Browser/App) 710 forms the client-side application interface, which may be implemented as a web browser JavaScript library, mobile application SDK, or server-side API integration. This component captures transaction data and user credentials, formatting them according to EMV 3-D Secure 2.3.1.1 protocol specifications for transmission to downstream processing systems.

The 3DS Server 720 serves as the protocol gateway responsible for constructing Authentication Request (AReq) messages and managing communications with the card network infrastructure. In accordance with one or more embodiments of the present invention, the 3DS Server 720 is configured to populate the EMV 3-D Secure 2.3.1.1 data fields including cardSecurityCode, cardSecurityCodeStatus, and cardSecurityCodeStatusSource, when dynamic authentication codes are provided by users during transaction initiation.

The 3DS Server 720 implements the security requirements specified in Chapter 6 of the EMV specification establishing secure links using Transport Layer Security (TLS) protocols with mutual authentication (EMV 3-D Secure Protocol and Core Functions Specification v2.3.1.1, EMVCo, LLC, May 2023. Available from: https://www.emvco.com/specifications/). Communications with downstream Directory Servers utilise TLS cipher suites as specified in Annex D of the EMV specification, with public key certificates signed by Directory Server Certificate Authorities (DS CA) for both client and server authentication.

3DS Server 720 maintains transaction state management capabilities for handling both Frictionless Flow (direct authentication without challenge) and Challenge Flow (requiring additional Cardholder interaction) scenarios as defined in Section 2.5 of the EMV specification. The server implements message timeout handling requirements, setting appropriate read timeout values as defined by individual Directory Server requirements and managing transaction timeouts ranging from 30 seconds for initial Challenge Request receipt to 10 minutes for ongoing challenge interactions.

The system incorporates the EMV 3-D Secure message validation requirements outlined in Section 5.1.7, performing content validation against Table A.1 data element specifications and implementing error handling procedures as detailed in Section 5.9. Message processing follows the HTTP POST requirements specified in Section 5.1.1, utilising JSON data format with UTF-8-character encoding and appropriate Content-Type headers for different message types.

3DS Server 720 is communicatively coupled to the Directory Server 730 via secure HTTPS connections and configured to exchange Authentication Request (AReq) and Authentication Response (ARes) messages according to EMVCo specifications, specifically implementing the authentication flow requirements detailed in Chapter 3 of the EMV 3-D Secure Protocol and Core Functions Specification v2.3.1.1.

### Directory Server 730

The Directory Server 730 provides the network routing infrastructure, and identifies the appropriate issuer systems for each authentication request based on card identification data. The Directory Server maintains routing tables that map card number ranges to issuer Access Control Server endpoints, enabling efficient request distribution across the card network infrastructure.

Communication flows 102, 104a, 104b, 114a, 114b, and 114c illustrate the EMV 3-D Secure protocol message exchanges between system components, comprising:
- Authentication Request (AReq) messages containing transaction data and cardholder information
- Authentication Response (ARes) messages returning authentication decisions and challenge requirements
- Challenge Request (CReq) messages initiating step-up authentication procedures
- Challenge Response (CRes) messages containing cardholder authentication responses
- Results Request (RReq) messages confirming final transaction outcomes
- Results Response (RRes) messages acknowledging transaction completion.

These communication channels utilise HTTPS-encrypted connections with mutual TLS authentication to ensure data integrity and confidentiality during transmission. The protocol messages are structured as JSON Web Signatures (JWS) containing encrypted authentication data and transaction parameters. JSON (JavaScript Object Notation) Web Signatures provide a standardised method for digitally signing JSON data structures, providing message authenticity and preventing tampering during transmission across network infrastructure.

### Issuer Host 300

As described with reference to Fig. 7, the Issuer Host 300 provides the payment processing infrastructure typically operated by entities such as TSYS, Worldpay, First Data (now Fiserv), or other major payment processors that provide authentication and authorization services to card issuing financial institutions. These processors operate as trusted third parties, managing the technical complexity of payment authentication on behalf of banks, credit unions and other financial institutions that issue payment cards but may lack the technical infrastructure to operate their own Access Control Servers.

The Issuer Host 300 comprises an Access Control Server (ACS) 340 and an Issuer Processing System 320, representing the core components through which payment processors handle authentication requests for their issuing bank clients.

### Access Control Server (ACS) 340

The ACS 340 provides the central authentication decision-making system operated by payment processors and comprises several specialized modules including a 3DS Protocol Interface 344, a Validation Routing Module 346, and a Risk Calculation Engine 342.

The 3DS Protocol Interface 344 comprises software modules specifically designed to receive and process Authentication Request (AReq) messages compliant with EMVCo 3D Secure specifications. The interface 344 includes message parsing components configured to extract structured data from AReq messages including transaction amount, currency, merchant category codes, device information, and cardholder account information. The interface 344 comprises specialized extraction logic for identifying and processing dynamic authentication codes contained within Card Security Code fields of AReq messages, distinguishing these from traditional static CVV codes through metadata flags or predetermined indicators associated with enrolled payment instruments.

The interface 344, in one or more embodiments, may further comprise message validation components for ensuring AReq message integrity and completeness, protocol version negotiation modules for handling different 3DS specification versions, and response generation components for creating Authentication Response (ARes) messages containing authentication decisions, risk scores, and status information.

In one or more embodiments, the Validation Routing Module 346 may comprise routing logic and communication interfaces specifically configured to direct authentication codes to appropriate validation endpoints based on the type of authentication data received.

In one or more embodiments, the module 346 further comprises decision algorithms for determining whether received authentication codes require dynamic validation through external systems (such as the Dynamic Authentication System 600) or static processing through traditional issuer validation systems. These decision algorithms may examine metadata flags within AReq messages, consult enrollment databases to determine if payment instruments are registered for dynamic authentication services, and apply routing rules configured by issuing banks for different cardholder segments.

The module 346 comprises API communication components including RESTful web service interfaces, message queuing systems for handling validation requests asynchronously, and timeout management mechanisms for ensuring timely processing of authentication requests. The module 346 may further include result processing components for interpreting binary validation responses from dynamic authentication systems and converting these into risk assessment inputs compatible with the Risk Calculation Engine 342

The Risk Calculation Engine 342 comprises algorithmic processing components configured. The conventional processing may include analysis of network origination data (IP geolocation scoring, device fingerprint analysis, proxy detection), behavioral pattern evaluation (transaction velocity analysis, geographic consistency scoring, merchant category risk assessment), and historical profile matching (user activity pattern analysis, location consistency evaluation). These factors are processed through machine learning algorithms including random forest classifiers and neural network models to generate probabilistic risk scores typically ranging from 0-100.

In one or more embodiments the Risk Calculation Engine 342 implements a modified scoring algorithm that operates as follows:
1. The system first calculates a conventional probabilistic risk score (P_score) using existing factors:
   P_score = Σ(factor_i × weight_i) for i = 1 to n probabilistic factors
2. When the Validation Routing Module 346 successfully validates a dynamic authentication code through communication paths 108b and 110b, it returns a binary result (B_auth) where:
   ∘ B_auth = 1 (VALID) indicates successful cryptographic verification
   ∘ B_auth = 0 (INVALID) indicates failed verification or timeout
3. The enhanced risk calculation implements the following technical logic: 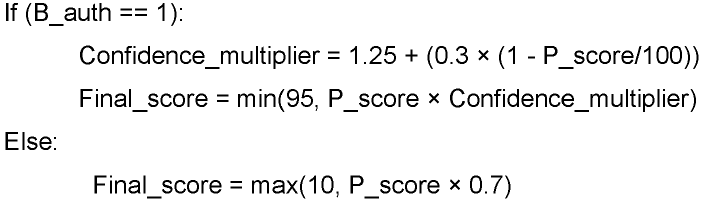 The described algorithm provides adaptive confidence weighting where the binary authentication factor has greater impact on lower-confidence probabilistic scores, effectively lifting borderline transactions (P_score 60-75) above typical challenge thresholds (usually 70-80) while maintaining conservative scoring for high-risk scenarios.
4. The system then evaluates:

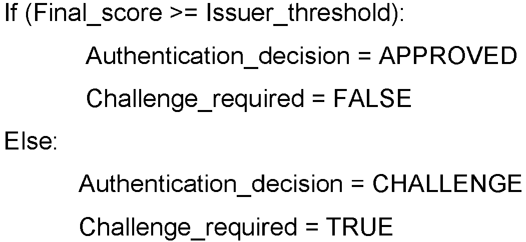

The described algorithmic implementation differentiates between binary authentication results and probabilistic factors based on their respective technical characteristics. Binary authentication results represent deterministic cryptographic verification rather than statistical inference. Unlike probabilistic factors that can be spoofed or manipulated (IP addresses via proxies, device fingerprints through browser modification), binary authentication requires possession of cryptographic secrets that have been validated through two-factor device authentication. The confidence multiplier therefore provides justifiable risk reduction based on the technical certainty of the authentication mechanism.

This algorithmic approach reduces computational overhead in two ways. Firstly, transactions that would normally trigger challenges due to P_score threshold exceedance are approved when B_auth validates successfully. Secondly, the system can make approval decisions without executing expensive probabilistic analysis chains when strong binary authentication is utilised.

The precise implementation of the logic is payment-processor specific, and the underlying algorithms are not publicly available. However, a person skilled in the art of risk-calculation algorithms would be able to adapt and implement the risk-calculation logic within existing payment processing frameworks.

### Issuer Processing System 320

The Issuer Processing System 320 comprises one or more computing systems operated by payment processors that maintain cardholder accountinformation and payment instrument data on behalf of issuing financial institutions.

The system 320 comprises API endpoints specifically configured for receiving validation requests from the Validation Routing Module 346, including both dynamic authentication validation requests that are forwarded to external systems and static authentication validation requests that are processed internally using traditional CVV verification algorithms. The system 320 includes secure communication modules for interfacing with the Dynamic Authentication System 600 via encrypted API calls, result processing components for interpreting validation responses and formatting them for return to the ACS 340.

### Portable Device 200

The Portable Device 200 comprises a Banking Application 210 and a Security Module 230, representing the cardholder-controlled environment where dynamic authentication codes are generated. The Portable Device 200 may be implemented as a smartphone, tablet, wearable device, or other mobile computing device capable of executing secure applications and generating cryptographic authentication codes.

The Banking Application 210 comprises a software application provided by card issuing institutions or developed by third-party vendors under license from issuers, configured to provide secure cardholder authentication services. The application 210 includes user interface components for displaying dynamically generated authentication codes in accessible formats, secure communication modules for establishing encrypted connections with issuer systems during enrolment and management processes, and integration components for interfacing with the Security Module 230 to access cryptographic functions and secure storage capabilities.

The Security Module 230 comprises a secure processing environment implemented through hardware-backed security features including ARM TrustZone secure enclaves, iOS Secure Enclave processors, Android Hardware Security Modules (HSM), or software-based trusted execution environments where hardware security is unavailable. The module 230 includes cryptographic key generation components utilizing true random number generators for creating TOTP secret keys, secure storage mechanisms for protecting cryptographic secrets from unauthorized access even in the event of device compromise, and time-based algorithm execution modules for generating Time-based One-Time Passwords (TOTP) using stored secrets and current time values.

### Dynamic Authentication System 600

The Dynamic Authentication System 600 comprises a Verification API 620 and represents the external validation infrastructure configured to authenticate dynamic codes generated by enrolled cardholders. The system 600 is implemented as cloud-based services operated by specialized authentication providers, payment processors, or technology companies providing dynamic authentication services to the payments industry.

The Verification API 620 comprises secure web service interfaces designed to receive authentication validation requests from Issuer Processing Systems operated by companies like TSYS and return binary validation results indicating whether provided dynamic codes are authentic and current. The API 620 includes decryption modules utilizing Hardware Security Modules (HSMs) or other cryptographic processing systems for securely accessing encrypted TOTP secrets stored in the system's databases, algorithmic processing components for executing time-based one-time password generation algorithms using decrypted secrets and synchronized time values, and binary comparison logic for determining whether received authentication codes match generated reference codes within acceptable time windows.

### Method and Data Flow

### Pre-Transaction Dynamic Authentication Code Generation

One or more embodiments in accordance with the present invention comprise an enhanced transaction processing method when compared to conventional card payment systems. The enhanced transaction processing method utilises the infra structure of conventional card payment systems and operates on the basis that users have previously activated their conventional payment instruments for dynamic authentication and subsequently obtained dynamic authentication codes through a secure pre-transaction process. As detailed in patent application number GB2412700.3, the activation process establishes the cryptographic foundation that enables secure dynamic code generation on user devices.

The activation procedure described in the patent application number GB2412700.3 involves several technical steps: the Portable Device 200 generates a cryptographically secure TOTP secret key within its Security Module 230, encrypts this secret using public key cryptography, and securely transmits the encrypted secret to the Dynamic Authentication System 600 for storage and validation purposes. This activation process creates a shared cryptographic secret between the user's device and the authentication infrastructure, enabling synchronised generation of time-based one-time passwords without requiring constant network communication.

Following the activation process described in the earlier application, the pre-transaction authentication occurs when the user accesses the Banking Application 210 on their Portable Device 200 and successfully completes biometric verification such as fingerprint recognition, face recognition, or voice recognition. The Security Module 230 then utilizes the stored TOTP secret key established during the activation process to generate a dynamic authentication code that is cryptographically valid for a predetermined time window, typically 30-90 seconds. The TOTP generation algorithm implements HMAC-SHA256 cryptographic operations using the device-stored secret and current timestamp values to produce unique, time-sensitive codes that cannot be predicted or replicated without access to the underlying cryptographic material.

The user subsequently provides this dynamic code as input during the merchant checkout process, substituting it for the static CVV that would conventionally be required. This dynamic code serves as cryptographic proof that the user has completed two-factor authentication on their registered device within the temporal validity window, providing a level of authentication certainty that static codes and probabilistic risk factors cannot achieve.

This pre-transaction code generation represents a fundamental technical departure from conventional authentication flows where verification occurs reactively after risk thresholds are exceeded. By front-loading the authentication process through secure device-based mechanisms that leverage the cryptographic infrastructure established in the earlier application, the system is able to deliver the subsequent technical improvements in computational efficiency and cascade failure prevention that are detailed in the following method description.

### Transaction Processing Method with Challenge Mitigation

In general outline, the method utilises system architecture components that operate together to achieve the technical effects of reduced computational overhead and cascade failure prevention, building upon the foundation of pre-generated dynamic authentication codes described above. This method contrasts directly with conventional processing and comprises technical improvements in resource utilization and processing efficiency.

The method begins when the 3DS Requestor (Browser/App) 710 receives transaction data from a user. Unlike conventional systems that only capture standard payment credentials, the upgraded system is configured to detect and process dynamic authentication codes when provided by users.

The authentication processing method begins at communications step 102 where the 3DS Requestor (Browser/App) 710 receives transaction data from a user and transmits this data to the 3DS Server 720. Unlike conventional systems that only capture standard payment credentials, the system implements technical logic to detect and process dynamic authentication codes when provided by users. The 3DS Requestor 710 executes input validation algorithms that recognize dynamic authentication code formats, typically consisting of 3-6 digit time-based codes that are distinguished from static CVV codes through pattern recognition and temporal freshness validation. The system automatically rejects codes that exceed the temporal validity window, typically configured as 2-3 TOTP generation cycles (60-90 seconds) to balance security with user experience. This threshold prevents replay attacks while accommodating reasonable user input delays during merchant checkout processes.

When dynamic codes are detected during this initial processing phase, the 3DS Requestor 710 populates the available EMV 3-D Secure 2.3.1.1 data fields in the transaction message structure. The cardSecurityCode field contains the dynamic authentication code value captured from the user input. The cardSecurityCodeStatus field is initially set to "PENDING" to indicate that validation processing is required. The cardSecurityCodeStatusSource field is populated with "MERCHANT" to indicate that the dynamic code was captured at the merchant interface level.

Communications path 104a represents the transmission of AReq messages from the 3DS Server 720 to the Directory Server 730. The 3DS Server 720 constructs these AReq messages to include the dynamic authentication data in addition to conventional transaction parameters, creating enhanced message structures that extend standard EMV 3-D Secure functionality. The message construction process implements JSON Web Signature (JWS) encoding with enhanced header parameters that enable downstream systems to recognize dynamic authentication processing capabilities.

The Directory Server 730 processes the enhanced AReq messages and implements routing logic via communication path 104b to the appropriate Access Control Server 340. This routing prioritizes issuers with dynamic authentication processing capabilities, thereby reducing network latency and improving overall processing efficiency for transactions that include dynamic authentication data.

Communications step 106 comprises an internal processing stage where the 3DS Protocol Interface 344 parses the AReq messages and extracts both conventional probabilistic risk factors and dynamic authentication data. The parsing logic implements validation of dynamic authentication code formats and triggers processing pathways when valid codes are detected.

Communication path 108a comprises the decision logic implemented by the Validation Routing Module 346, which executes algorithmic determination of when external validation should be performed. The system evaluates whether the cardSecurityCode field is present and contains valid format data, whether the issuer supports dynamic validation processing, and whether the validation service is currently available. When these conditions are satisfied, the Validation Routing Module 346 initiates secure communication via path 108a to the Issuer Processing System 320.

Communication path 110a comprises the external validation request transmission from the Issuer Processing System 320 to the Dynamic Authentication System 600. This communication implements OAuth 2.0 authentication protocols with encrypted request payloads containing card identifiers and dynamic authentication codes. The Verification API 620 performs cryptographic validation using TOTP algorithms, temporal window verification, and replay attack prevention mechanisms. Communication path 110b comprises the return of binary validation results, typically completing within 100-200 milliseconds and including confidence indicators and timestamp validation data.

Communication path 112a represents the data transmission channel for validation results from the Issuer Processing System 320 to the Risk Calculation Engine 342. The Risk Calculation Engine 342 receives these validation results as structured data messages containing binary authentication status (VALID/INVALID), confidence indicators, and timestamp validation metadata.

In response to receiving the binary validation data, the Risk Calculation Engine 342 implements the composite scoring algorithms that represent the core technical innovation of the present invention. The engine processes conventional probabilistic factors in parallel with the received binary validation results, executing the mathematical algorithms that provide adaptive confidence weighting with greater risk score improvements for marginal transactions.

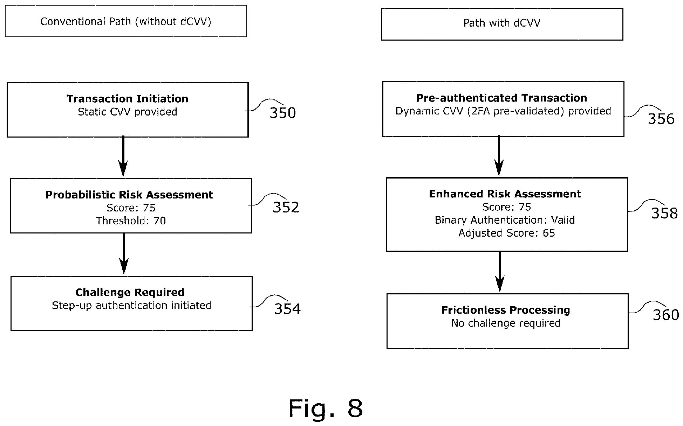

Figure 8 illustrates the comparative technical effects of this enhanced risk calculation process. In the conventional path shown at steps 850, 852, and 854, a transaction with a probabilistic risk score of 75 exceeds the issuer threshold of 70, thereby triggering challenge authentication procedures. This conventional processing pathway requires the computational overhead and vulnerability exposure detailed in Figure 1, including SMS gateway services, session state management, and network communication delays.

In contrast, in accordance with the escribed embodiment of the present invention, the enhanced path illustrated at steps 856, 858, and 860 illustrates how the same underlying transaction conditions are processed differently when dynamic authentication validation is available. At step 856, the pre-authenticated transaction includes the dynamic CVV that has been generated through two-factor authentication on the user's device. At step 858, the enhanced risk assessment processes the same probabilistic score of 75 but integrates the binary authentication result showing "Valid" status. The composite scoring algorithm then generates an adjusted score of 65, which falls below the issuer threshold of 70. This adjustment reflects the mathematical confidence weighting that accounts for the deterministic nature of the cryptographic authentication validation.

The decision logic compares composite risk scores against issuer thresholds using the technical algorithms detailed previously. Communication path 112b comprises the transmission of the final authentication decision back to the 3DS Protocol Interface 344. When the composite score meets or exceeds the issuer threshold, the decision is set to "APPROVED", the challengeRequired flag set to false, and the cardSecurityCodeStatus field is updated to "VALID". Conversely, when the score remains below threshold requirements, the decision is set to "CHALLENGE", the challengeRequired flag set to true, and the cardSecurityCodeStatus field is updated to "INSUFFICIENT".

Communication paths 114a, 114b, and 114c comprise the response transmission sequence that completes the enhanced processing cycle. The ACS 340 generates ARes messages via communication path 114a to the Directory Server 730, with these response messages including populated cardSecurityCodeStatus and cardSecurityCodeStatusSource fields that provide downstream systems with validation result information. Communication path 114b comprises the transmission of the ARes message from the Directory Server 730 to the 3DS Server 720, while communication path 114c comprises the final transmission of the authentication result to the 3DS Requestor 710.

The technical effect of challenge avoidance is achieved when transactions that would have triggered challenge procedures in conventional systems instead proceed directly to approval through this message flow. This elimination occurs because the binary authentication data has modified the risk calculation sufficiently to satisfy issuer threshold requirements without requiring additional verification steps. The computational overhead described in the conventional system analysis is thereby eliminated, including SMS gateway API calls, session state database allocation, user interface rendering, and timeout processing mechanisms.

Additionally, the system reduces cascade failure scenarios by removing the vulnerability windows described in Figure 1. Since authentication validation occurs through secure device-based mechanisms rather than network-transmitted codes, there are significantly fewer interceptable communications that can lead to fraudulent transactions. This technical approach has demonstrated measurable fraud reduction effectiveness, as evidenced by deployment data showing zero card-not-present fraud incidents across over 500,000 transactions using the dynamic authentication system in illustrated in Fig.2 (Nilson Report, June 2025). The elimination of interceptable authentication vectors has proven so effective that criminals have devalued compromised card data when dynamic authentication is deployed, with reports indicating that criminals declined to purchase card numbers from issuers known to have dynamic CVV protection covering one-third of their card base.

This prevents, or at least reduces the likelihood of, the cascade failure cycle:
- No OTP interception → No fraudulent approvals → No threshold increases → No additional challenge triggering
- System stability maintained under attack conditions instead of degrading performance
- Computational load remains constant rather than exponentially increasing during security incidents

The fraud prevention effectiveness documented in real-world deployments supports the technical assertion that device-based cryptographic authentication provides superior security compared to network-transmitted authentication codes.

This technical method achieves challenge avoidance through dynamic authentication integration while maintaining full compatibility with existing EMV 3-D Secure infrastructure, providing measurable improvements in computational efficiency and system reliability.

In view of the foregoing description, it will be evident to a person skilled in the art that various modifications may be made within the scope of the invention.

The following alternatives and variations are provided as examples and are not intended to be exhaustive.

The risk calculation engine 342 may further comprise machine learning components utilizing historical transaction data to improve risk prediction accuracy, real-time fraud detection algorithms for identifying emerging attack patterns, and issuer-specific configuration modules allowing individual banks to customize risk tolerance levels and challenge thresholds. The engine 342 may comprise compliance monitoring components ensuring adherence to regional regulations such as PSD2 Strong Customer Authentication requirements and reporting modules for providing issuing banks with fraud analytics and authentication performance metrics.

The Issuer Processing System 320 may include cardholder databases containing account balances, credit limits, transaction history, and authentication preferences, card management systems for handling card activation, suspension, and replacement processes, and authorization engines for making real-time payment approval decisions. The system 320 may further comprise cardholder enrolment management components for tracking which payment instruments are registered for dynamic authentication services, configuration management systems for storing issuer-specific authentication policies and risk parameters, and integration interfaces for connecting with core banking systems operated by issuing financial institutions. The system 320 may include real-time balance and account status checking components, fraud alert generation systems for notifying issuers of suspicious authentication patterns, and reporting engines for providing issuing banks with detailed analytics on authentication performance and fraud prevention effectiveness.

The Banking Application 210 may further comprise enrolment management interfaces allowing cardholders to activate dynamic authentication services for specific payment instruments, notification systems for alerting cardholders to authentication requests or security events, and biometric authentication components for securing access to dynamic code generation functions through fingerprint, facial recognition, or other biometric verification methods. The application 210 may include offline operation capabilities ensuring dynamic codes can be generated even when network connectivity is unavailable, synchronization components for maintaining accurate time references required for TOTP generation, and backup and recovery mechanisms for handling device replacement scenarios while maintaining authentication continuity.

The Security Module 230 may further comprise key derivation functions for generating payment-instrument-specific secrets from master keys, cryptographic attestation capabilities for proving the integrity of the secure environment to remote systems, and secure communication channels for exchanging cryptographic material during enrolment processes. The module 230 may include anti-tampering mechanisms for detecting and responding to attempts to extract cryptographic secrets, secure clock synchronization components for maintaining accurate time references, and cryptographic agility features for supporting multiple authentication algorithms and key lengths as security requirements evolve.

The Verification API 620 may further comprise time synchronization services for maintaining accurate temporal references across distributed system components, replay attack prevention mechanisms for detecting and rejecting previously used authentication codes, and cryptographic key management systems for securely storing and accessing payment-instrument-specific secrets. The API 620 may include load balancing and redundancy components for ensuring high availability of validation services, audit logging systems for maintaining detailed records of authentication attempts, and monitoring components for detecting unusual usage patterns that might indicate compromise or attack.

The system may support alternative communication protocols including WebSocket connections for real-time validation updates, message queuing systems for handling high-volume authentication requests, and blockchain-based verification mechanisms for enhanced audit trails. Communication channels may implement redundant routing through multiple network paths, adaptive compression algorithms for bandwidth optimisation, and protocol fallback mechanisms for maintaining compatibility with legacy systems.

The portable device implementations may include secure element integration for hardware-based key storage, trusted platform module (TPM) utilization for attestation services, and secure boot verification for ensuring device integrity. Alternative biometric authentication methods may include voice recognition, iris scanning, behavioural biometrics based on typing patterns, and multi-modal biometric fusion for enhanced security.

The system may be deployed using containerized microservices architectures, serverless computing platforms for scalable processing, edge computing nodes for reduced latency, and hybrid cloud-on-premises configurations for regulatory compliance. Load balancing may implement geographic distribution algorithms, auto-scaling based on transaction volume, and failover mechanisms for disaster recovery.

The Dynamic Authentication System 600 may be implemented using alternative architectural approaches that provide different operational characteristics and deployment flexibility. The system may utilise Software Development Kit (SDK) based implementations where authentication tokens are bound to specific devices and used for both registration and card identification purposes. In SDK implementations, cryptographic secrets including TOTP secret keys are stored in both the Security Module 230 of the Portable Device 200 and the system database within the Dynamic Authentication System 600, enabling offline dynamic code generation capabilities through the Banking Application 210. This approach requires API communications between the Verification API 620 and both Issuer Processing Systems 320 and Portable Devices 200 through SDK interfaces integrated with the Banking Application 210.

Alternatively, the Dynamic Authentication System 600 may be implemented using Application Programming Interface (API) based architectures where tokens are used exclusively for card registration and identification purposes through the Central Management API 640. In API implementations, all TOTP secret keys are centrally stored in the Dynamic Authentication System 600 database, with Time-based One-Time Password generation and cryptographic validation performed entirely within the Verification API 620 infrastructure. This approach simplifies the communication architecture by requiring only direct API communication between the Verification API 620 and Issuer Processing Systems 320, with all subsequent authentication flows managed by the Issuer Processing System 320 without direct Portable Device 200 interaction through the Banking Application 210.

The API-based implementation may provide advantages in terms of simplified integration requirements with Issuer Processing Systems 320, centralized security management within the Dynamic Authentication System 600, and reduced Portable Device 200 resource consumption by eliminating local Security Module 230 processing requirements. The SDK-based implementation may offer benefits including offline authentication capabilities through the Banking Application 210, distributed security architecture utilizing the Security Module 230, and enhanced user privacy through local TOTP secret storage within the Portable Device 200.

The selection between implementation approaches may be determined based on specific deployment requirements including network connectivity constraints affecting communication with the Dynamic Authentication System 600, security policy preferences for the Security Module 230, integration complexity considerations with existing Issuer Processing Systems 320, and user experience objectives for the Banking Application 210.

Both implementation approaches maintain compatibility with the enhanced Risk Calculation Engine 342 algorithms and challenge mitigation techniques described in the Access Control Server 340 architecture, providing equivalent technical effects in terms of computational efficiency improvements and cascade failure prevention while offering different operational characteristics suitable for varying deployment scenarios within the 3D Secure payment processing infrastructure.

## Claims

1. A payment processing network configured for dynamic authentication integration, the network comprising:
an Access Control Server ACS and issuer processing system operative to communicate with each other over the network, wherein the ACS is configured to:
receive from the communications network an Authentication Request (AReq) message comprising a dynamic authentication code;
extract the dynamic authentication code from the AReq message;
generate a validation request comprising the dynamic authentication code;
and
transmit the validation request to the issuer processing system; and
wherein the issuer processing system is configured to:
receive the validation request from the ACS;
forward the validation request comprising the dynamic authentication code to a dynamic authentication system;
receive a validation result from the dynamic authentication system; and
return the validation result to the ACS;
the ACS further comprising a risk calculation engine configured to:
receive the validation result from the issuer processing system;
calculate a risk factor derived from transaction metadata;
apply a risk modification algorithm that utilises the validation result and the risk factor to generate a modified risk factor; and
generate an authentication response message (ARes) based on the modified risk factor for transmission over the communications network.

2. A network according to claim 1, further comprising a computing device configured to generate the dynamic authentication code using a time-based algorithm and stored cryptographic secret within a secure processing environment.

3. A network according to claim 1 or claim 2, wherein the dynamic authentication code is a time-based one-time password (TOTP) generated using a TOTP secret key and a current time value.

4. A network according to any preceding claim, wherein the risk calculation engine is further configured to apply a weighting function responsive to the validation result indicating a successful dynamic code validation.

5. A network according to claim 4, wherein the weighting function comprises applying a predetermined risk reduction factor to the risk factor derived from the transaction metadata..

6. A network according to any preceding claim, wherein the ACS is further configured to:
identify the presence of a dynamic authentication code within the AReq messages based on an associated metadata flag; and
extract a dynamic Card Verification Value (dCVV) from a Card Security Code field within the AReq message upon identifying the presence of a dynamic authentication code.

7. A network according to any preceding claim, wherein the dynamic authentication system is configured to validate the dynamic authentication code against a stored reference secret.

8. A network according to claim 7, wherein the dynamic authentication system is further configured to:
decrypt a stored encrypted cryptographic secret corresponding to payment instrument identification data;
execute a time-based algorithm using the decrypted secret to generate a reference authentication code; and
execute a comparison between the received dynamic authentication code and the generated reference authentication code.

9. A network according to any preceding claim, wherein the issuer processing system is further configured to execute static validation of the authentication code when dynamic validation is unavailable.

10. An Access Control Server (ACS) for use in a network according to any preceding claim, wherein the ACS is configured to:
receive an Authentication Request (AReq) message comprising a dynamic authentication code;
extract the dynamic authentication code from the AReq message;
generate a validation request comprising the dynamic authentication code;
transmit the validation request to an issuer processing system;
receive a validation result from the issuer processing system;
calculate a risk factor derived from transaction metadata;
apply a risk modification algorithm that utilises the validation result and the risk factor to generate a modified risk factor; and generate an authentication response message (ARes) based on the modified risk factor.

11. An issuer processing system for use in a network according to any preceding claim,
wherein the issuer processing system is configured to:
receive a validation request from an ACS;
forward the validation request comprising a dynamic authentication code to a dynamic authentication system;
receive a validation result from the dynamic authentication system; and
return the validation result to the ACS.

12. A method for dynamic authentication integration in payment processing over a network, the method comprising:
receiving, at an Access Control Server (ACS), an Authentication Request (AReq) message comprising a dynamic authentication code;
extracting the dynamic authentication code from the AReq message;
generating a validation request comprising the dynamic authentication code;
transmitting the validation request to an issuer processing system;
receiving, at the issuer processing system, the validation request from the ACS;
forwarding the validation request comprising the dynamic authentication code to a dynamic authentication system;
receiving a validation result from the dynamic authentication system at the issuer processing system;
returning the validation result to the ACS;
calculating, at the ACS, a risk factor derived from transaction metadata;
applying a risk modification algorithm that utilises the validation result and the risk factor to generate a modified risk factor; and
generating an authentication response message (ARes) based on the modified risk factor.

13. A method according to claim 12, further comprising generating the dynamic authentication code using a time-based algorithm and stored cryptographic secret within a secure processing environment.

14. A method according to claim 13, wherein generating the dynamic authentication code comprises generating a time-based one-time password (TOTP) using a TOTP secret key and a current time value.

15. A method according to any of claims 12 to 14, further comprising applying a weighting function when the validation result indicates successful dynamic code validation.

16. A method according to any of claims 12 to 15, wherein applying the weighting function comprises applying a predetermined risk reduction factor to the risk factor derived from the transaction metadata.

17. A method according to any of claims to 12 to 16, further comprising identifying the presence of a dynamic authentication code within the AReq messages based on associated metadata flag.

18. A method according to any of claims 12 to 17, further comprising validating the dynamic authentication code against a stored reference secret at the dynamic authentication system.

19. A method according to claim 18, wherein validating the dynamic authentication code comprises: executing a time-based algorithm using a stored secret to generate a reference authentication code; and executing a comparison between the received dynamic authentication code and the generated reference authentication code.

20. A method according to any of claims 12 to 19, further comprising executing static validation of the authentication code when dynamic validation is unavailable.
